# FASCICULE DE BREVET EUROPEEN

(11) **EP 3 233 364 B1**
(45) Date de publication et mention de la délivrance du brevet: **11.09.2019**
(21) Numéro de dépôt: 15823690.1
(22) Date de dépôt: 18.12.2015
(51) Int. Cl.: B23K 31/02, B29C 65/00, B23K 20/06, B23K 103/18, B23K 103/16

(54) **PROCEDE POUR L'ASSEMBLAGE ENTRE UNE PIECE EN MATERIAU METALLIQUE ET UNE PIECE EN MATERIAU COMPOSITE A MATRICE ORGANIQUE ; ENSEMBLE CORRESPONDANT**
MONTAGEVERFAHREN ZWISCHEN EINEM TEIL AUS METALLMATERIAL UND EINEM TEIL AUS ORGANISCHEM MATRIXVERBUNDWERKSTOFF, ENTSPRECHENDE ANORDNUNG
ASSEMBLY METHOD BETWEEN A PART MADE OF METAL MATERIAL AND A PART MADE OF ORGANIC MATRIX COMPOSITE MATERIAL; CORRESPONDING ASSEMBLY

(30) Priorité: 19.12.2014 FR 1462943
(43) Date de publication de la demande: 25.10.2017
(73) Titulaire: Ecole Centrale De Nantes, 44300 Nantes (FR); Faurecia Automotive Composites, 92000 Nanterre (FR)
(72) Inventeur: RACINEUX, Guillaume, 44690 Chateau Thebaud (FR); PRIEM, Didier, 44240 La Chapelle sur Erdre (FR); LEBRUN, Jean-Michel, 44000 Nantes (FR); AMOSSE, Yannick, 44470 Carquefou (FR); KHALIL, Chady, Safra-Mont Liban (LB)
(74) Mandataire: Lavoix
(86) Numéro de dépôt international: PCT/FR2015/053654
(87) Numéro de publication internationale: WO 2016/097656

(56) Documents cités:
- DE-A1- 1 911 940
- DE-A1-102006 024 604
- DE-A1-102011 106 700
- FR-A1- 2 998 210
- US-A1- 2004 028 858
- US-A1- 2004 155 030

## Description

### DOMAINE TECHNIQUE AUQUEL SE RAPPORTE L'INVENTION

La présente invention concerne l'assemblage entre deux pièces, à savoir une pièce en matériau métallique et une pièce en matériau composite en matrice organique.

Elle concerne en particulier un procédé pour l'obtention d'un tel assemblage, ainsi qu'un ensemble constitué des deux pièces assemblées, conformément au préambule des revendications 1 et 12 (voir, par exemple, US 2004/155030).

### ARRIERE-PLAN TECHNOLOGIQUE

Dans de nombreux domaines, notamment celui du transport, les structures multi-matériaux se généralisent de manière à répondre aux exigences croissantes des utilisateurs (notamment en termes d'allégement des structures, d'esthétique et de mise en oeuvre de nouvelles fonctionnalités telles que l'isolation électrique ou l'amortissement).

Il est ainsi fréquent d'avoir besoin d'associer des pièces en matériau métallique et des pièces en matériau composite à matrice organique.

Pour assurer une rigidité satisfaisante de deux pièces assemblées, il est souvent préférable de réaliser des liaisons intimes, obtenues généralement par soudage.

Or, en pratique, les matériaux métalliques et les matériaux composites à matrice organique ne sont pas compatibles entre eux pour la mise en oeuvre d'un soudage hétérogène.

Pour cette raison, les technologies actuelles pour l'assemblage de tels matériaux sont :
- l'assemblage mécanique, par exemple le vissage ou le rivetage, et
- l'assemblage par adhésion, notamment par collage.

Mais la technologie d'assemblage mécanique présente notamment l'inconvénient de générer un alourdissement de la structure en raison des éléments de liaison rapportés. De plus, un perçage des pièces pour le positionnement de ces éléments de liaison peut générer des zones de fragilité, de concentration des contraintes ou d'amorçage de rupture.

L'assemblage par collage a quant à lui pour inconvénient de nécessiter une préparation des surfaces, et aussi de ne pas permettre une prédiction fiable du comportement à long terme de ce collage.

US 2004/155030 décrit un procédé d'assemblage de composants de véhicule afin de former un ensemble de châssis de véhicule où les composants sont formés à partir de matériaux dissemblables tels que des matériaux métalliques et non métalliques. Un premier composant structurel est soudé sur un second composant structurel au moyen d'une technique de soudage par impulsions magnétiques.

DE-10 2011 106700 décrit un composant, en particulier pour véhicule automobile, comprenant un premier élément formé au moins partiellement d'un matériau plastique renforcé par des fibres, le premier élément comprenant une pièce en matériau métallique insérée au moins partiellement dans le premier élément et apte à être soudée à un second élément métallique par une soudure par points ou par projection.

FR 2 998 210 décrit un ensemble d'au moins un insert métallique et d'au moins une nappe de renfort pour matériau composite comprenant des fibres de renfort, dans lequel l'insert métallique comprend des saillies conformées pour traverser la nappe en passant entre les fibres de renfort et se plier par déformation plastique en enserrant les fibres de renfort.

Dans ce contexte, il existe un besoin de nouvelles technologies pour l'assemblage entre des pièces en matériau métallique et des pièces en matériau composite à matrice organique.

### OBJET DE L'INVENTION

La présente invention concerne une nouvelle technologie d'assemblage entre une pièce en matériau métallique (appelée par la suite « pièce métallique ») et une pièce en matériau composite à matrice organique (appelée par la suite « pièce composite »), qui a l'intérêt de s'appuyer sur un assemblage par soudage.

Pour cela, la présente invention prévoit de rapporter un insert métallique dans la pièce composite, au niveau d'une surface à souder, dont une partie est ménagée de manière exposée de sorte à être assemblée par une technique de soudage à grande vitesse avec une surface complémentaire de la pièce métallique.

Le procédé pour l'assemblage entre une pièce en matériau métallique et une pièce en matériau composite à matrice organique selon l'invention est défini dans la revendication 1.

Selon d'autres caractéristiques avantageuses, pouvant être prises en combinaison ou indépendamment :
- la pièce composite comporte une face avant munie de la surface à souder, et lors de l'étape de fourniture, l'insert métallique de la pièce composite se situe affleurant de la face avant de ladite pièce composite, ou en retrait de la face avant de ladite pièce composite (par exemple dans le cas d'un matériau composite stratifié formé de plusieurs plis, se situe entre lesdits plis de ladite pièce composite et avec découpe dans les plis sus-jacents pour obtenir la partie exposée de l'insert métallique) ;
- pour une pièce composite réalisée dans un matériau thermoplastique, l'étape de fourniture de la pièce composite comprend une opération d'inclusion de l'insert métallique par chauffage et par pression dans ladite pièce composite ;
- l'insert métallique a une épaisseur comprise entre 0,1 et 3 mm ;
- l'insert métallique et la pièce métallique sont réalisés dans un matériau choisi parmi l'acier, un alliage d'aluminium et le titane ;
- l'insert métallique consiste en une plaque munie d'orifices traversants ou une plaque pleine ; de préférence, si la surface à souder de la pièce métallique est projetée sur la surface à souder de la pièce composite, l'insert métallique consiste en une plaque munie d'orifices traversants ayant une forme évasée du côté de la partie exposée, pour augmenter la tenue à l'arrachement mécanique de l'insert métallique dans la pièce composite ;
- si la surface à souder de la pièce métallique est projetée sur la surface à souder de la pièce composite, au moins une partie de la surface non-exposée de l'insert métallique, en contact avec le matériau composite, est préparée, par exemple par grenaillage, de manière à augmenter la surface de contact entre ledit insert métallique et le matériau constitutif de la pièce composite ;
- la pièce métallique et/ou la partie exposée de l'insert métallique comporte une partie à projeter dont une surface avant constitue la surface à souder, et l'étape de projection est obtenue au moyen d'une impulsion magnétique qui est appliquée sur ladite partie à projeter ; dans ce cas, éventuellement, la pièce métallique et/ou la partie exposée de l'insert métallique est non-conductrice électrique, et la partie à projeter comporte une surface arrière, opposée à la surface à souder, qui est recouverte d'un matériau conducteur électrique ;
- l'étape de projection à grande vitesse consiste en une étape de projection à grande vitesse de la surface à souder de la pièce métallique sur la surface à souder de la pièce composite ;
- l'étape de projection à grande vitesse consiste en une étape de projection à grande vitesse de la partie exposée de l'insert métallique sur la surface à souder de la pièce métallique.

L'invention concerne également un ensemble comprenant une pièce réalisée en matériau métallique et une pièce réalisée en matériau composite tel que défini dans la revendication 12.

### DESCRIPTION DETAILLEE DE L'INVENTION

La présente invention sera encore illustrée, sans être aucunement limitée, par la description suivante de différents modes de réalisation illustrés sur les figures annexées dans lesquelles :
- la figure 1 est une vue générale schématique de deux pièces assemblées par soudage;
- la figure 2 représente schématiquement, et en coupe, les deux principales étapes d'un procédé d'assemblage, à savoir une étape de positionnement (A) puis une étape de projection à grande vitesse (B) ;
- la figure 3 représente une première forme de réalisation d'une pièce composite, comportant un insert métallique affleurant une face avant de ladite pièce composite ;
- la figure 4 représente une deuxième forme de réalisation possible de la pièce composite selon l'invention, dans laquelle cette pièce est de type multi-plis et l'insert métallique est rapporté entre ses plis, les plis sus-jacents étant découpés pour obtenir la partie exposée dudit insert métallique ;
- la figure 5 représente, vue de dessus et en perspective, la surface à souder d'une pièce composite qui est équipée d'un insert métallique consistant en une plaque munie d'une pluralité d'orifices traversants ;
- la figure 6 représente schématiquement la pièce composite selon la figure 5 vue selon un plan de coupe vertical, passant par son insert métallique ;
- la figure 7 représente, schématiquement et en perspective, la surface à souder d'une pièce composite qui est munie d'un insert métallique sous la forme d'une plaque métallique pleine allongée ;
- la figure 8 représente, de manière schématique et en perspective, la surface à souder d'une pièce composite qui est munie de plusieurs inserts métalliques juxtaposés et chacun sous la forme d'une plaque métallique pleine ;
- la figure 9 illustre schématiquement, en deux étapes, une opération d'inclusion de l'insert métallique, par chauffage et par pression, dans l'épaisseur d'une pièce composite ;
- la figure 10 représente schématiquement un premier mode de réalisation particulier des étapes de positionnement et de projection du procédé d'assemblage selon l'invention, mettant en oeuvre un système de cales isolantes ;
- la figure 11 représente schématiquement un deuxième mode de réalisation des étapes de positionnement et de projection du procédé d'assemblage non couvert par l'invention, dans lequel la partie à projeter de la pièce métallique se présente sous la forme d'un bossage ;
- la figure 12 représente schématiquement un troisième mode de réalisation particulier des étapes de positionnement et de projection du procédé d'assemblage selon l'invention, dans lequel la plaque métallique comporte une partie à projeter prenant la forme d'un pliage ;
- la figure 13 représente schématiquement un quatrième mode de réalisation particulier des étapes de positionnement et de projection du procédé d'assemblage selon l'invention, dans le cas d'une pièce composite selon la figure 4 dont l'insert métallique est rapporté entre ses plis ;
- la figure 14 représente schématiquement une autre forme de réalisation de l'insert métallique, du genre insert à « agrafer » ;
- la figure 15 illustre schématiquement, en deux étapes, une opération d'inclusion de l'insert métallique selon la figure 14, par chauffage et par pression, dans l'épaisseur d'une pièce composite ;
- la figure 16 représente schématiquement un cinquième mode de réalisation particulier des étapes de positionnement et de projection du procédé d'assemblage selon l'invention, dans le cas d'une pièce composite selon la figure 4 dont l'insert métallique est projeté contre la pièce métallique.

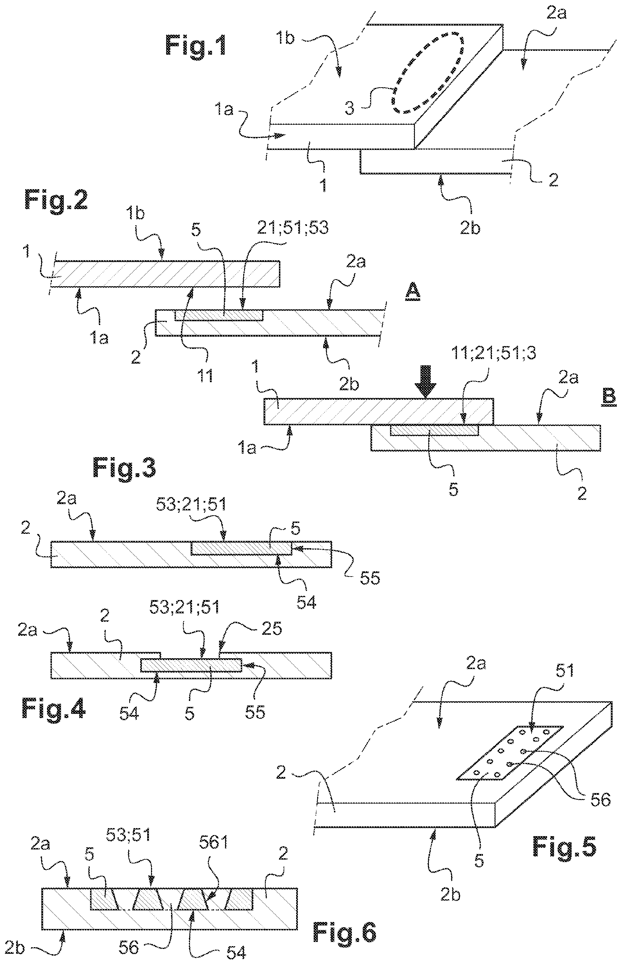

Tel que représenté sur la figure 1, on propose ainsi une nouvelle technologie pour l'assemblage entre, d'une part, une pièce 1 en matériau métallique et, d'autre part, une pièce 2 en matériau composite à matrice organique, au niveau d'une zone de soudage 3.

Dans un souci de simplification, ces pièces 1, 2 sont encore désignées, respectivement, sous les appellations de « pièce métallique 1 » et de « pièce composite 2 »,

Par « assemblage », on entend en particulier une liaison permanente, ou non démontable (sous réserve de dégradation ou de détérioration), entre les deux pièces 1, 2 au niveau de la zone de soudage 3.

Par « assemblage », on entend en particulier un « soudage » assurant une continuité de la nature des matériaux à assembler.

Par « assemblage », on entend avantageusement un assemblage par plaquage à grande vitesse, de préférence sous la forme d'une technique de soudage par impulsion magnétique.

La pièce métallique 1 est avantageusement réalisée en un matériau métallique choisi parmi l'acier, un alliage d'aluminium ou le titane.

La pièce métallique 1 se présente avantageusement sous la forme d'une plaque.

Tel que développé ci-après, si cette pièce métallique 1 comporte une partie à projeter 15, au moins cette partie à projeter 15 comporte une épaisseur comprise entre 0,5 et 3 mm.

Tout ou partie de la pièce métallique 1, si elle est fixe, peut comporter une épaisseur quelconque.

Cette pièce métallique 1 comporte en particulier deux faces opposées (figures 1 et 2) :
- une face avant 1a, destinée à venir en regard de la pièce composite 2 et comportant une surface à souder 11 pour former une partie de la zone de soudage 3, et
- une face arrière 1b, opposée à ladite face avant 1a.

La pièce composite 2 est quant à elle constituée d'un matériau comprenant :
- un renfort, généralement des fibres, et
- une matrice organique.

Les fibres du renfort sont caractérisées par leur composition (métal, verre, polymère, carbone, végétal, etc.), leur longueur (courtes (0,1 à 1 mm), longues (1 à 50 mm) ou continues (supérieures à 50 mm), et leur disposition (mat ou tissé) ou multi-matériaux NCF.

Les fibres continues peuvent être disposées parallèlement les unes par rapport aux autres, pour un renforcement unidirectionnel, ou selon un angle prédéfini (45° par exemple les unes par rapport aux autres) pour un renforcement multidirectionnel, ou encore d'une façon aléatoire.

Par « NCF » ou « Non Crimp Fabrics », on entend un tissu multiaxial qui est constitué de plusieurs nappes (ou couches) unidirectionnelles (UD), cousues entre elles avec un fil (PET généralement).

Par exemple, un matériau NCF biaxial +45°/-45° est un tissu composé de deux nappes UD : la première nappe est composée d'UD à +45° et la seconde nappe est composée d'UD à - 45°. Il existe également des matériaux NCF biaxiaux 0°/90° ou des matériaux NCF triaxiaux 0°/+45°/-45°.

Ce matériau composite peut encore être stratifié, formé de plusieurs plis (non représentés).

Par « pli », on entend couramment le semi-produit composite (fibres plus matrice) présenté sous forme quasi-bidimensionnelle ; on entend encore une épaisseur composée de mèches ou « tapes » parallèles, liés par de la matrice.

La matrice organique est avantageusement choisie parmi les matériaux thermodurcissables et les matériaux thermoplastiques.

Par « matériau thermodurcissable », on entend notamment :
- les résines polyesters insaturés (UP), qui sont généralement utilisées avec des fibres de verre,
- les résines époxyde (EP), qui sont généralement utilisées avec des fibres de carbone,
- les résines vinylester,
- les résines polyuréthane,
- les résines phénoliques (PF),
- les résines polyimides thermodurcissables (PIRP) et polybismaléimides (BMI).

Par « matériau thermoplastique », on entend notamment :
- le polypropylène,
- le polyamide,
- le polyétherimide (PEI),
- le poly(sulfure de phénylène) (PPS) et
- la poly(éther-éther-cétone de phénylène) (PEEK).

De son côté également, la pièce composite 2 se présente avantageusement sous la forme d'une plaque, comportant une épaisseur comprise entre 0,5 et 10 mm.

Cette pièce composite 2 comporte en particulier deux faces opposées (figures 1 et 2) :
- une face avant 2a, destinée à venir en regard de la pièce métallique 1 et comportant une surface à souder 21 pour former une partie de la zone de soudage 3, et
- une face arrière 2b, opposée à ladite face avant 2a.

Selon l'invention, la surface à souder 11 de la pièce métallique 1 est destinée à être assemblée, par une technique de projection à grande vitesse, avec la surface à souder 21 de la pièce composite 2.

Pour cela, tel qu'illustré sur la figure 2, le procédé selon l'invention comprend des étapes successives suivantes :
- une étape de fourniture des deux pièces 1, 2 à assembler,
- une étape de positionnement des surfaces à souder 11, 21, en regard et à distance l'une de l'autre (partie A de la figure 2), et
- pour obtenir la zone de soudage 3 (partie B de la figure 2), une étape de projection à grande vitesse de la surface à souder 11 de la pièce métallique 1 sur la surface à souder 21 de la pièce composite 2 et/ou de la surface à souder 21 de la pièce composite 2 sur la surface à souder 11 de la pièce métallique 1.

Pour obtenir un tel assemblage (alors même que les matériaux respectifs sont incompatibles pour une liaison par soudage), la pièce composite 2 fournie comporte au moins un insert métallique 5 qui est partiellement noyé au niveau de sa surface à souder 21 (figure 2).

Lors de l'étape de projection à grande vitesse, la surface à souder 11 de la pièce métallique 1 est ainsi plaquée à grande vitesse sur la surface à souder 21 de la pièce composite 2, provoquant alors un phénomène de soudage entre l'insert métallique 5 de la pièce composite 2 et une partie complémentaire de la surface à souder 11 de la pièce métallique 1.

On obtient ainsi une liaison par soudure, sans apport de matière, entre l'insert métallique 5 et la pièce métallique 1 (correspondant à une continuité de la matière entre eux).

L'insert métallique 5 est par conséquent logé dans la pièce composite 2, au niveau de la zone où l'on souhaite réaliser l'assemblage avec la pièce métallique 1.

Pour cette raison, selon le cas, l'insert métallique 5 peut être placé à distance de la bordure du panneau composite 2, mais aussi le long de cette bordure.

L'insert métallique 5, et son implantation dans la pièce composite 2, sont décrits plus en détails ci-dessous en relation avec les figures 2 à 9.

En l'espèce, l'insert métallique 5 est implanté dans la pièce composite 2 de sorte à présenter une partie exposée 51 qui est dénudée au niveau de sa surface à souder 21 (figure 2 - partie A notamment).

Par « partie exposée », on entend ainsi une portion de la surface de l'insert métallique 5 qui est directement accessible au niveau de la surface à souder 21 de la pièce composite 2. En particulier, cette partie exposée 51 de l'insert métallique 5 ne doit pas être recouvert par le matériau composite, notamment par la matrice organique.

L'insert métallique 5 est réalisé dans un matériau qui est choisi en fonction du matériau constituant la pièce métallique 1 à assembler.

En particulier, ce matériau est choisi pour autoriser une technique de soudage par plaquage dynamique entre la partie exposée 51 de l'insert métallique 5 et la surface à souder 11 de la pièce métallique 1.

Par exemple, cet insert métallique 5 peut être réalisé en acier ou en alliage d'aluminium lorsque la pièce métallique 1 est réalisée en alliage aluminium.

Sans que cela soit limitatif, d'autres combinaisons de matériaux possibles sont :
- Aluminium-aluminium,
- Aluminium-cuivre
- Aluminium-magnésium
- Aluminium-titane
- Cuivre-cuivre
- Cuivre-acier
- Cuivre-bronze
- Nickel-titane
- Nickel-nickel
- Acier-acier

Un tel insert métallique 5, par exemple en forme d'une plaque ou d'une platine, comporte :
- une face extérieure 53, destinée à former la partie exposée 51 de l'insert métallique 5,
- une face intérieure 54 opposée, noyée au sein du matériau de la pièce composite 2, et
- un contour périphérique 55, noyé au sein du matériau de la pièce composite 2.

Par exemple, cet insert métallique a une épaisseur comprise entre 0,1 et 3 mm.

Tel que représenté sur la partie A de la figure 2, mais aussi sur les figures 3 et 4, l'insert métallique 5 est incrusté dans l'épaisseur de la pièce composite 2 ; il s'étend sur une partie seulement de son épaisseur.

En particulier, tel qu'illustré sur la figure 3, l'insert métallique 5 affleure la face avant 2a de la pièce composite 2.

Dans ce cas, la face extérieure 53 de l'insert métallique 5 et la face avant 2a de la pièce composite 2 s'étendent dans un même plan, ou au moins approximativement dans un même plan.

De manière alternative, tel qu'illustré sur la figure 4, l'insert métallique 5 peut être en retrait de la face avant 2a de la pièce composite 2 ; la face extérieure 53 de l'insert métallique 5 est ainsi en retrait de la face avant 2a de la pièce composite 2.

Pour cela, l'insert métallique 5 peut être rapporté entre les plis (non représentés) de la pièce composite 2.

Une découpe 25 est alors ménagée dans les plis sus-jacents par rapport à la face extérieure 53 de l'insert métallique 5, de manière à obtenir la partie exposée 51 de l'insert métallique 5 correspondant à la surface à souder 21 de la pièce composite 2.

Pour optimiser sa cohésion avec le matériau composite, la surface de l'insert métallique 5 en contact avec ce matériau composite, dite « surface non exposée », peut être préparée de sorte à obtenir une surface irrégulière.

Par « surface non exposée », on entend en particulier la face intérieure 54 et/ou le contour périphérique 55 de l'insert métallique 5.

Par exemple, un grenaillage peut être appliqué sur cette surface non exposée de l'insert métallique 5, de sorte à augmenter la surface de contact entre la matrice de la pièce composite 2 et l'insert métallique 5.

Par ailleurs, l'insert métallique 5 peut consister en une pièce pleine ou une pièce ajourée.

Par exemple, comme illustré sur les figures 5 et 6, si la surface à souder 11 de la pièce métallique 1 est projetée sur la surface à souder 21 de la pièce composite 2, l'insert métallique 5 « fixe » est muni d'une pluralité d'orifices traversants 56, débouchant au niveau de ses faces extérieure 53 et intérieure 54.

Chacun de ces orifices traversants 56 est délimité par un contour 561 qui présente une forme évasée depuis la surface intérieure 54 jusqu'à la surface extérieure 53 (figure 6), par exemple une forme générale tronconique ou en tronc de pyramide.

Ces orifices traversants 56 sont avantageusement remplis par le matériau constitutif de la pièce composite 2 (matrice organique et éventuellement les fibres) de sorte à augmenter la tenue à l'arrachement mécanique de l'insert métallique 5 apporté sur la pièce composite 2.

Le pourcentage d'orifices 56 est adapté en fonction du compromis attendu entre, d'une part, la tenue par soudure entre l'insert métallique 5 et la pièce métallique 1 et, d'autre part, le maintien de l'insert métallique 5 dans le matériau composite.

Une plaque pleine, fixe ou à projeter, consiste quant à elle en une plaque dépourvue des orifices traversants tels que décrits ci-dessus en relation avec les figures 5 et 6.

Le ou les inserts métalliques 5 de la surface à souder 21 peuvent se présenter sous différentes formes et dimensions, en fonction notamment de l'assemblage souhaité.

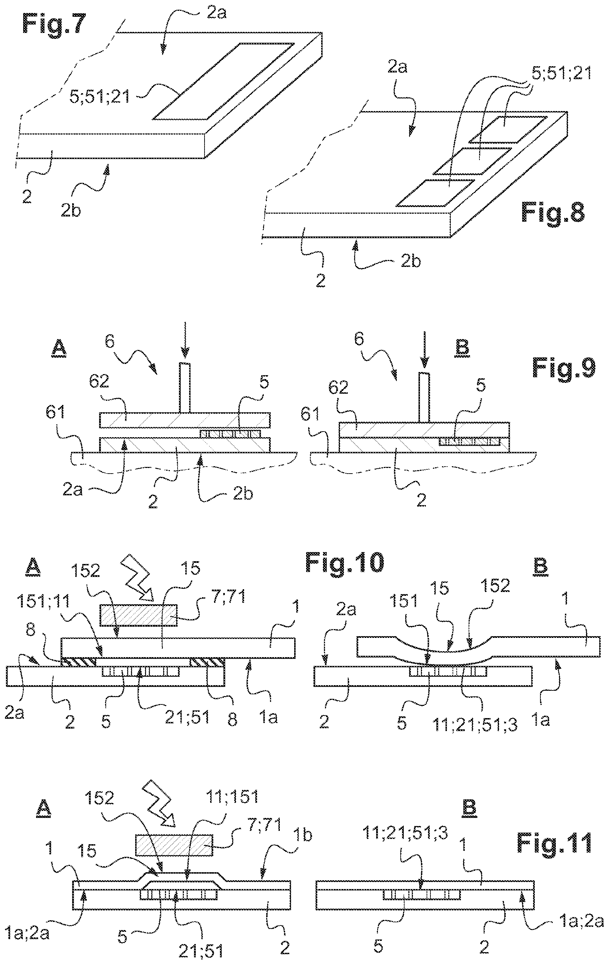

La figure 7 représente une première forme de réalisation dans laquelle l'insert métallique 5 de la surface à souder 21 a une forme allongée, ici de forme générale rectangulaire.

Sa partie exposée 51 consiste ainsi également en une bande allongée de forme générale rectangulaire, pour l'obtention d'une zone de soudage 3 continue.

Par exemple, à titre indicatif, l'insert métallique 5 présente une longueur comprise entre 10 et 100 mm et une largeur comprise entre 10 et 30 mm.

La figure 8 montre encore une autre forme de réalisation dans laquelle la surface à souder 21 de la pièce composite 2 est constituée par la partie exposée 51 d'un groupe d'inserts métalliques 5 juxtaposés (en l'occurrence au nombre de trois), pour former une zone de soudage 3 par points.

Chaque insert métallique 5 a ici une forme générale carrée ou rectangulaire ; sa partie exposée 51 consiste ainsi également en une forme carrée ou rectangulaire.

Par exemple, à titre indicatif, chaque insert métallique 5 présente une longueur comprise entre 20 et 40 mm et une largeur comprise entre 20 et 40 mm.

La pièce composite 2, avec son insert métallique 5 rapporté, peut être obtenue par tout procédé adapté.

Par exemple, tel qu'illustré sur la figure 9, la pièce composite 2 peut être est obtenue au cours d'une opération d'inclusion de l'insert métallique 5 par chauffage et par pression au sein d'une presse chauffante 6.

Un tel procédé est possible dans le cas d'une pièce composite 2 réalisée dans un matériau thermoplastique.

Une telle opération d'inclusion consiste :
- à déposer une pièce composite 2, dépourvue d'insert métallique 5, sur une partie fixe 61 de la presse chauffante 6,
- à déposer l'insert métallique 5 sur la face avant 2a de la pièce composite 2, au niveau de sa surface à souder 21 (partie A de la figure 9),
- à appliquer une pression avec chauffage par le biais d'un mors chauffant mobile 62 de la presse chauffante 6, de sorte à chauffer l'insert métallique 5 et à l'incruster dans la plaque composite 2 (partie B de la figure 9).

En particulier, l'insert métallique 5 est chauffé jusqu'à une température qui est fonction de la température de fusion de la matrice de la pièce composite 2. Plus précisément, cet insert métallique 5 est amené à une température égale ou supérieure à cette température de fusion.

Par exemple, l'insert métallique 5 est chauffé à une température de 260°C, avec l'application d'une pression de 27 bars, pour une matrice en polyamide extrudé 6.6.

Cet assemblage pourrait aussi être obtenu par tout autre procédé d'assemblage, par exemple par couture (l'insert métallique 5 est cousu avec les tissus pré-imprégnés avant consolidation).

Partant d'une telle pièce composite 2 avec son insert métallique 5, telle que décrite ci-dessus, l'étape de positionnement relatif des deux pièces 1, 2 est mise en oeuvre de sorte que les surfaces à souder 11, 21 s'étendent en regard l'une par rapport à l'autre et à une distance comprise avantageusement entre 0,5 et 1,5 mm.

L'étape de projection à grande vitesse est quant à elle mise en oeuvre de sorte à obtenir un plaquage à grande vitesse des surfaces à souder 11, 21 l'une sur l'autre et pour obtenir un soudage entre la partie exposée 51 de l'insert métallique 5 de la pièce composite 2 et la partie complémentaire de la surface à souder 11 de la pièce métallique 1.

Par « grande vitesse », on entend en particulier une vitesse comprise entre 150 m/s et 400 m/s.

Cette étape de projection est avantageusement mise en oeuvre par le biais d'une impulsion qui est appliquée sur une partie à projeter 15 de la pièce métallique 1 et/ou sur la partie exposé 51 de l'insert métallique 5 (formant ainsi la partie à projeter de cet insert métallique 5).

En l'occurrence, cette partie à projeter 15 de la pièce métallique 1 comporte deux surfaces opposées :
- une surface avant 151, correspondant à la surface à souder 11 de la pièce métallique 1 et située de côté de sa face avant 1a, et
- une surface arrière 152, opposée à la surface à souder 11 précitée et située du côté de la face arrière 1b de la pièce métallique 1.

Une force de projection est ainsi appliquée sur cette partie à projeter 15, dans un sens s'étendant depuis sa surface arrière 152 vers sa surface avant 151 et dans une direction orientée vers la surface à souder 21 de la pièce composite 2.

L'étape de projection est avantageusement obtenue par le biais de moyens de projection par impulsion magnétique 7.

Un cycle de soudage, classique en soi, peut être résumé par les 6 étapes suivantes :
- un chargeur est alimenté par un réseau d'énergie électrique ;
- l'énergie électrique est alors stockée dans des condensateurs sous forme d'énergie électrostatique, l'énergie stockée étant graduellement augmentée via la tension de charge commandée par une unité de contrôle d'énergie ;
- lorsque le seuil fixé de la tension de charge est atteint, un éclateur (ou déchargeur) décharge très rapidement l'énergie électrostatique des condensateurs dans un inducteur 71 (lors de cette décharge, dont la durée est de l'ordre d'une centaine de µs, des courants électriques extrêmement élevés de l'ordre de plusieurs centaines de kA sont générés) ;
- la circulation de ce courant élevé à travers l'inducteur 71 génère très brusquement un champ d'induction magnétique dans la bobine ; il y a transformation d'énergie électrostatique en énergie magnétique ; le champ magnétique ainsi créé peut posséder une grande amplitude (de l'ordre de plusieurs dizaines de tesla) ; il est fortement variable au cours du temps, donc génère dans la pièce métallique 1 à souder des courants induits appelés aussi « courants de Foucault » ;
- l'interaction entre le champ magnétique primaire créé par la bobine et les courants induits dans la pièce métallique 1 génère des forces importantes d'origine magnétique, forces agissant mécaniquement sur la pièce métallique 1 dans laquelle circulent les courants de Foucault ;
- ces forces magnétiques transforment très brusquement l'énergie magnétique en énergie mécanique agissant radialement sur la partie à projeter 15 de la pièce métallique 1 et/ou sur la partie exposée 51 de l'insert métallique 5, pour leur propulsion sur l'autre pièce (respectivement la pièce composite 2 et la pièce métallique 1) maintenue fixe.

Ce phénomène de projection est ainsi la conséquence d'un transfert d'énergie extrêmement rapide, la puissance de ce processus étant de l'ordre de plusieurs centaines de mégawatts, mais sur des durées très courtes.

Ce processus est pratiquement adiabatique et il n'y a pas véritablement de transfert de chaleur : la soudure entre l'insert métallique 5 et la pièce métallique 1 est effectuée « à froid ».

En effet, les matériaux n'atteignent avantageusement pas plus de 30°C. Il n'y a donc pas de zone affectée thermiquement dans le matériau composite qui ne perd pas ses propriétés.

Le procédé de soudage par impulsion magnétique constitue également un procédé de soudage du genre « Solid State », ce qui signifie que le matériau n'est pas mis en fusion durant le cycle de soudage.

Dans le cas d'une pièce métallique non conductrice électrique, la surface arrière 152 de la partie à projeter 15 est alors avantageusement recouverte d'un matériau conducteur électrique formant « pousseur », par exemple réalisé en alliage d'aluminium, de sorte à obtenir la projection recherchée.

De manière alternative, il peut être envisagé d'utiliser toute autre technique adaptée à produire une projection à grande vitesse, par exemple par le biais d'une action mécanique ou par le biais d'un choc laser.

Dans les différents cas, sous l'effet de la force de propulsion :
- la partie à projeter 15 est déformée de sorte que sa surface à souder 11 est plaquée à grande vitesse contre la surface à souder 21 de la pièce composite 2, ou
- la partie exposée 51 de l'insert métallique 5 est déformée de sorte que sa surface à souder 21 est plaquée à grande vitesse contre la surface à souder 11 de la pièce métallique 1.

Ce plaquage à grande vitesse génère alors un phénomène de soudage entre la partie exposée 51 de l'insert métallique 5 de la pièce composite 2 et la partie complémentaire de la surface à souder 11 de la pièce métallique 1.

Il est ainsi obtenu un ensemble multi-matières, comprenant une pièce 1 réalisée en matériau métallique et une pièce 2 réalisée en matériau composite à matrice organique, dans lequel ladite pièce composite 2 comporte un insert métallique 5 noyé partiellement dans ladite pièce composite 2, lequel insert métallique 5 comporte une partie exposée 51 en surface 2a de ladite pièce composite 2 qui est soudée avec une partie complémentaire de la surface 11 de la pièce métallique 1.

Différentes formes de réalisation sont envisageables pour obtenir ce positionnement et cette projection, telles que décrites plus en détails ci-après en relation avec les figures 10 à 13, et 16.

Dans ces différentes formes de réalisation, l'étape de projection est avantageusement mise en oeuvre de sorte à obtenir un plaquage progressif des surfaces à souder 11, 21 l'une sur l'autre, pour assurer une expulsion des oxydes.

Par « plaquage progressif » on entend notamment un contact des surfaces à souder qui commence par un point, puis qui s'étend sur une ligne, avant de se propager jusqu'à ce que toute la surface soit en contact (surface de soudage).

Selon une première forme de réalisation conformément à l'invention et illustrée sur la figure 10, les pièces à souder 1, 2 sont rapportées à distance l'une de l'autre par le biais d'un système de cales isolantes électriques 8 réparties sur le pourtour des surfaces à souder 11, 21 (Figure 10 - partie A).

Les faces avant 1a, 2a des deux pièces 1, 2, et leurs surfaces à souder 11, 21 respectives, sont alors séparées d'une distance égale à la hauteur des cales 8 rapportées.

L'étape de projection va ainsi propulser à grande vitesse la partie à projeter 15 de la pièce métallique 1, en direction de la surface à souder 21 de la pièce composite 2, dans l'espace séparant leurs faces avant respectives 1a, 2a (Figure 10 - Partie B).

La partie à projeter 15 présente ainsi, conformément à l'invention, un agencement convexe par rapport à la face avant 1a de la pièce métallique 1.

Selon un autre mode de réalisation non couvert par la présente invention et illustré sur la figure 11, la partie à projeter 15 de la pièce métallique 1 se présente initialement sous la forme d'un bossage qui est concave au niveau de la surface à souder 11 (saillant au niveau de la face arrière 1b de la pièce métallique 1) (figure 11 - partie A).

Le bossage est en particulier ménagé de sorte à conserver une distance comprise entre 0,5 et 1,5 mm, entre sa surface à souder 11 et la surface à souder 21 de la pièce composite 2.

L'étape de projection va ainsi propulser à grande vitesse la partie à projeter 15 de la pièce métallique 1, en forme de bossage, en direction de la surface à souder 21 de la pièce composite 2 (Figure 11 - partie B).

La partie à projeter 15 présente ainsi, au final, un agencement plan, ou pratiquement plan, par rapport à la pièce métallique 1 (Figure 11 - partie B).

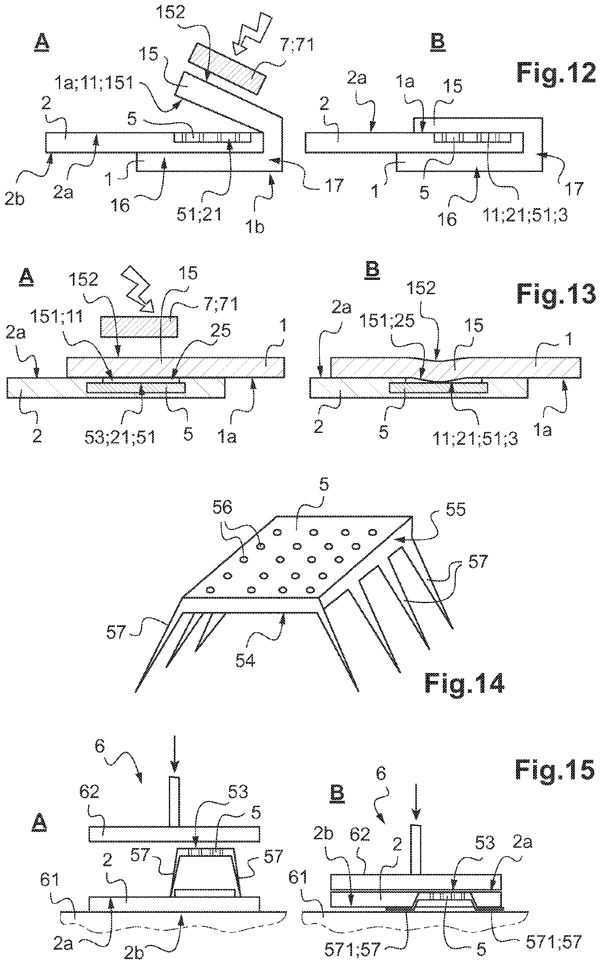

Selon un troisième mode de réalisation conformément à l'invention et illustré sur la partie A de la figure 12, la partie à projeter 15 de la pièce métallique 1 consiste en un pliage de cette plaque métallique 1, formant un angle avec la surface à souder 21 de la pièce composite 2.

La pièce métallique 1 comporte ainsi :
- une partie arrière 16, recouvrant la face arrière 2b de la pièce composite 2,
- une partie latérale 17, épousant le bord de la pièce composite 2, et
- une partie avant, s'étendant en regard de la face avant 2a de la pièce composite 2 et formant un pliage destinée à constituer la partie à projeter 15.

L'étape de projection va ainsi propulser à grande vitesse la partie à projeter 15 de la pièce métallique 1, en forme de pliage, en direction de la surface à souder 21 de la pièce composite 2 (Figure 12 - partie B).

La pièce composite 2 est ainsi, conformément à l'invention, prise en sandwich entre la partie arrière 16 et la partie avant 17 de la pièce métallique 1 (Figure 12 - partie B).

Selon une quatrième forme de réalisation conformément à l'invention et illustré sur la figure 13, la pièce composite 2 de la figure 4 (avec l'insert métallique 5 rapporté entre les plis de ladite pièce composite 2) et une pièce métallique 1 plane sont rapportées l'une sur l'autre (Figure 13 - partie A).

Les faces avant 1a, 2a des deux pièces 1, 2 sont en appuie l'une sur l'autre, et leurs surfaces à souder 11, 21 respectives sont alors séparées d'une distance égale à la hauteur des plis sus-jacents par rapport à la face extérieure 53 de l'insert métallique 5.

Cette hauteur correspond encore à la hauteur de la découpe 25 ménagée dans les plis sus-jacents précités.

L'étape de projection va ainsi propulser à grande vitesse la partie à projeter 15 de la pièce métallique 1, en direction de la surface à souder 21 de la pièce composite 2, dans l'espace séparant leurs surfaces à souder 11, 21 respectives (Figure 13 - Partie B).

La partie à projeter 15 présente ainsi, conformément à l'invention, un agencement convexe par rapport à la face avant 1a de la pièce métallique 1, s'étendant au sein de la découpe 25.

Dans ce cas, la distance entre les surfaces à souder 11, 21 permet un soudage direct, sans l'utilisation d'isolants ou de plots.

La figure 14 représente schématiquement une autre forme de réalisation de l'insert métallique 5, du genre insert à « agrafer », pour optimiser sa cohésion avec le matériau composite.

Un tel insert métallique 5, similaire à celui décrit ci-dessus en relation avec les figures 2 à 9, comporte encore des pattes de montage monoblocs 57 qui sont réparties au niveau de son contour périphérique 55 (en particulier de ces grands côtés) et qui s'étendent du côté de sa face intérieure 54.

L'insert métallique 5 comporte avantageusement des orifices traversants 56 tels que développés ci-dessus en relation avec les figures 5 et 6.

Les pattes de montage monoblocs 57 en regard (raccordées aux deux grands côtés) sont ici divergentes les unes par rapport aux autres, s'écartant depuis l'insert métallique 5.

Ces pattes de montage 57 sont également flexibles, de sorte à être repliées lors du montage de l'insert métallique 5 sur la pièce composite 2.

A cet égard, la figure 15 représente schématiquement une opération d'inclusion de l'insert métallique 5 selon la figure 14, par chauffage et par pression, dans l'épaisseur d'une pièce composite 2, cela selon un procédé similaire à celui décrit ci-dessus en relation avec la figure 9.

Un tel procédé est possible dans le cas d'une pièce composite 2 réalisée dans un matériau thermoplastique.

Une telle opération d'inclusion consiste :
- à déposer une pièce composite 2, dépourvue d'insert métallique 5, sur une partie fixe 61 de la presse chauffante 6,
- à déposer l'insert métallique 5 sur la face avant 2a de la pièce composite 2, au niveau de sa surface à souder 21 (partie A de la figure 15),
- à appliquer une pression avec chauffage par le biais d'un mors chauffant mobile 62 de la presse chauffante 6, de sorte à chauffer l'insert métallique 5 et à l'incruster dans la plaque composite 2.

Là encore, l'insert métallique 5 est chauffé jusqu'à une température qui est fonction de la température de fusion de la matrice.

Lors de cette dernière étape, les pattes de montage monoblocs 57 pénètrent dans l'épaisseur de la pièce composite 2 pour ressortir du côté de sa face arrière 2b, jusqu'à ce que la face extérieure 53 de l'insert métallique 5 s'étende dans le plan, ou au moins approximativement dans le plan, de la face avant 2a de la pièce composite 2.

La partie saillante 571 de ces pattes de montage monoblocs 57 (ressortant du côté de la face arrière 2b de la pièce composite 2) sont alors repliées contre la face arrière 2b de la pièce composite 2, avantageusement en moyen d'une forme adaptée de la partie fixe 61 de la presse chauffante 6.

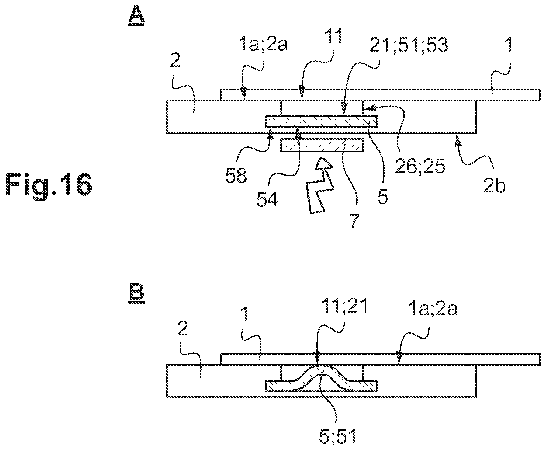

La figure 16 illustre une variante de réalisation du quatrième mode de réalisation conformément à l'invention, selon la figure 13.

Là encore, la pièce composite 2 de la figure 4 (avec l'insert métallique 5 rapporté entre les plis de ladite pièce composite 2) et une pièce métallique 1 plane sont rapportées l'une sur l'autre (Figure 16 - partie A).

L'insert métallique 5 de la pièce composite 2 (et en particulier sa face extérieure 53) se situe en retrait de la face avant 2a de ladite pièce composite 2, au sein d'un trou borgne 26 s'ouvrant au niveau de ladite face avant 2a et fermée au niveau de la face arrière 2b.

L'insert métallique 5 est implanté dans la pièce composite 2 de sorte à présenter - la partie exposée 51 qui est dénudée au niveau de sa surface à souder 21, et - une partie périphérique 58 noyée dans le matériau composite.

Les faces avant 1a, 2a des deux pièces 1, 2 sont en appui l'une sur l'autre ; et leurs surfaces à souder 11, 21 respectives sont alors séparées d'une distance égale à la hauteur séparant la face extérieure 53 de l'insert métallique 5 et la face avant 2a de ladite pièce composite 2.

Ce retrait correspond avantageusement aux plis sus-jacents par rapport à la face extérieure 53 de l'insert métallique 5. Cette hauteur correspond ainsi à la hauteur de la découpe 25 ménagée dans les plis sus-jacents précités.

L'étape de projection va ainsi consister à propulser à grande vitesse la surface à souder 21 de la pièce composite 2 (en l'espèce la partie exposée 51 de l'insert métallique 5) en direction de la surface à souder 11 de la pièce métallique 1, dans l'espace séparant leurs surfaces à souder 11, 21 respectives (Figure 16 - Partie B).

La force de projection est appliquée sur cette partie exposée 51, dans un sens s'étendant depuis sa face intérieure 54 vers sa surface extérieure 53 et dans une direction orientée vers la surface à souder 11 de la pièce métallique 1.

L'étape de projection est avantageusement obtenue par le biais de moyens de projection par impulsion magnétique 7, disposés en regard de la face arrière 2b de la pièce composite 2 et de la face intérieure 54 de l'insert métallique 5.

La partie exposée 51 de l'insert métallique 5 présente ainsi, conformément à l'invention, un agencement convexe, en direction de la face avant 1a de la pièce métallique 1 et de la face avant 2a de ladite pièce composite 2, s'étendant au sein de la découpe 25.

Dans ce cas encore, la distance entre les surfaces à souder 11, 21 permet un soudage direct, sans l'utilisation d'isolants ou de plots.

De manière générale, la présente invention a l'intérêt de permettre un assemblage efficace entre une pièce métallique et une pièce composite, sans atteinte de leurs propriétés respectives.

Cette solution technique a en plus l'intérêt de permettre la mise en oeuvre de moyens classiques, habituellement utilisés pour des assemblages de deux pièces métalliques entre elles.

## Revendications

1. Procédé pour l'assemblage entre une pièce (1) en matériau métallique et une pièce (2) en matériau composite à matrice organique, comprenant les étapes successives suivantes :
a) une étape de fourniture desdites deux pièces (1, 2),
lesquelles pièces (1, 2) comportent chacune une surface (11, 21) destinée à être soudée avec une surface complémentaire (11, 21) de l'autre pièce (1, 2), et
**caractérisé en ce que** :
laquelle surface à souder (21) de ladite pièce composite (2) est constituée, au moins partiellement, par une partie exposée (51) d'au moins un insert métallique (5) qui est noyé partiellement dans ladite pièce composite (2),
et **caractérisé par** les étapes suivantes :
b) une étape de positionnement desdites surfaces à souder (11, 21) en regard et à distance l'une de l'autre, et
c) une étape de projection à grande vitesse de la surface à souder (11) de la pièce métallique (1) et/ou de la partie exposée (51) de l'insert métallique (5), l'une sur l'autre, pour obtenir un plaquage à grande vitesse desdites surfaces à souder (11, 21) l'une sur l'autre et pour obtenir un soudage entre la partie exposée (51) de l'insert métallique (5) de la pièce composite (2) et la partie complémentaire de la surface à souder (11) de la pièce métallique (1), dans lequel l'étape de projection est mise en oeuvre de sorte à obtenir un plaquage progressif des surfaces à souder (11, 21) l'une sur l'autre, pour assurer une expulsion des oxydes,
et
la pièce métallique (1) et/ou la partie exposée (51) de l'insert métallique (5) comporte une partie à projeter (15, 51) dont une surface avant (151, 53) constitue la surface à souder (11, 21), et ledit plaquage progressif est obtenu par le biais de :
- au moins une cale isolante électrique (8) ménagée entre les deux pièces (1, 2) et entourant la partie à projeter (15), ou
- une partie à projeter (15) en forme d'un bossage, ou
- un pliage sur le bord de la pièce métallique (1), destiné à former ladite partie à projeter (15).

2. Procédé d'assemblage selon la revendication 1, **caractérisé en ce que** la pièce composite (2) comporte une face avant (2a) munie de la surface à souder (21), et
**en ce que**, lors de l'étape de fourniture, l'insert métallique (5) de la pièce composite (2) se situe :
- affleurant de la face avant (2a) de ladite pièce composite (2), ou
- en retrait de la face avant (2a) de ladite pièce composite (2).

3. Procédé d'assemblage selon l'une quelconque des revendications 1 ou 2, pour une pièce composite (2) réalisée dans un matériau thermoplastique, **caractérisé en ce que** l'étape de fourniture de la pièce composite (2) comprend une opération d'inclusion de l'insert métallique (5), par chauffage et par pression, dans ladite pièce composite (2).

4. Procédé d'assemblage selon l'une quelconque des revendications 1 à 3, **caractérisé en ce que** l'insert métallique (5) est réalisé en acier, en alliage d'aluminium ou en titane, et **en ce que** ladite pièce métallique (1) est réalisée en acier ou en alliage d'aluminium.

5. Procédé d'assemblage selon l'une quelconque des revendications 1 à 4, **caractérisé en ce que** l'insert métallique (5) consiste en une plaque munie d'orifices traversants (56) ou une plaque pleine.

6. Procédé d'assemblage selon la revendication 5, **caractérisé en ce que** l'insert métallique (5) consiste en une plaque munie d'orifices traversants (56) ayant une forme évasée du côté de la partie exposée (51) rapporté dans la pièce composite (2) de sorte que le matériau composite remplit au moins une partie desdits orifices traversants (56).

7. Procédé d'assemblage selon l'une quelconque des revendications 1 à 6, **caractérisé en ce qu'**au moins une partie de la surface non-exposée (54, 55) de l'insert métallique (5), en contact avec le matériau composite, est préparée de manière à augmenter la surface de contact entre ledit insert métallique (5) et le matériau constitutif de la pièce composite (2).

8. Procédé d'assemblage selon l'une quelconque des revendications 1 à 7, **caractérisé en ce que**, la pièce métallique (1) et/ou la partie exposée (51) de l'insert métallique (5) comportant une partie à projeter dont une surface avant (151, 53) constitue la partie à souder (11, 21), l'étape de projection est obtenue au moyen d'une impulsion magnétique qui est appliquée sur ladite partie à projeter (15, 51).

9. Procédé d'assemblage selon la revendication 8, **caractérisé en ce que** la pièce métallique (1) et/ou la partie exposée (51) de l'insert métallique (5) est non-conductrice électrique, et **en ce que** la partie à projeter (15, 51) comporte une surface arrière (152, 54), opposée à la surface à souder (11, 21), qui est recouverte d'un matériau conducteur électrique.

10. Procédé d'assemblage selon l'une quelconque des revendications 1 à 9, **caractérisé en ce que** l'étape de projection à grande vitesse consiste en une étape de projection à grande vitesse de la surface à souder (11) de la pièce métallique (1) sur la surface à souder (21) de la pièce composite (2).

11. Procédé d'assemblage selon l'une quelconque des revendications 1 à 9, **caractérisé en ce que** l'étape de projection à grande vitesse consiste en une étape de projection à grande vitesse de la partie exposée (51) de l'insert métallique (5) sur la surface à souder (11) de la pièce métallique (1).

12. Ensemble comprenant une pièce (1) réalisée en matériau métallique et une pièce (2) réalisée en matériau composite à matrice organique, issu d'un procédé d'assemblage selon l'une quelconque des revendications 1 à 11, la pièce métallique (1) comportant une face avant (1a), en regard de la pièce composite (2), et la pièce composite (2) comportant une face avant (2a), en regard de la pièce métallique (1), et une face arrière (2b), opposée à ladite face avant (2a),
et **caractérisé par** :
ladite pièce composite (2) comportant au moins un insert métallique (5) noyé partiellement dans ladite pièce composite (2), lequel au moins un insert métallique (5) comporte une partie exposée (51) en surface (2a) de ladite pièce composite (2) qui est soudée avec une partie complémentaire de la surface (11) de la pièce métallique (1), et une face extérieure (53), formant la partie exposée (51) de l'insert métallique (5),
dans lequel la partie à projeter (15) présente un agencement convexe par rapport à la face avant (1a) de la pièce métallique (1),
ou la pièce métallique (1) comporte une partie arrière (16) recouvrant la face arrière (2b) de la pièce composite (2), une partie latérale (17) épousant le bord de la pièce composite (2), et une partie avant s'étendant en regard de la face avant (2a) de la pièce composite (2) et formant un pliage destinée à constituer la partie à projeter (15), la pièce composite (2) étant prise en sandwich entre la partie arrière (16) et la partie avant (17) de la pièce métallique 1,
ou une découpe (25) est ménagée dans des plis sus-jacents de la pièce composite (2) par rapport à la face extérieure (53) de l'insert métallique (5), la partie à projeter (15) présentant un agencement convexe par rapport à la face avant (1a) de la pièce métallique (1), s'étendant au sein de la découpe (25),
ou la partie exposée (51) de l'insert métallique (5) présente un agencement convexe, en direction de la face avant (1a) de la pièce métallique (1) et de la face avant (2a) de ladite pièce composite (2), s'étendant au sein de la découpe (25).

## Patentansprüche

1. Verfahren für den Zusammenbau eines Bauteils (1) aus Metallmaterial mit einem Bauteil (2) aus Verbundmaterial mit organischer Matrix, aufweisend die folgenden sukzessiven Schritte:
a) einen Schritt des Bereitstellens der besagten zwei Bauteile (1, 2), wobei diese Bauteile (1, 2) jedes eine Fläche (11, 21) aufweist, die dazu bestimmt ist, um mit einer komplementären Fläche (11, 21) des anderen Bauteils (1, 2) verschweißt zu werden, und
**dadurch gekennzeichnet, dass**:
diese Fläche zum Verschweißen (21) des besagten Verbund-Bauteils (2) gebildet ist zumindest teilweise von einem exponierten Abschnitt (51) wenigstens eines Metalleinsatzes (5), der teilweise in das besagte Verbund-Bauteil (2) eingebettet ist, und
**gekennzeichnet durch** die folgenden Schritte:
b) einen Schritt des Positionierens der besagten Flächen zum Verschweißen (11, 21) einander gegenüber und im Abstand voneinander, und
c) einen Schritt des Schießens mit großer Geschwindigkeit der Fläche zum Verschweißen (11) des Metall-Bauteils (1) und/oder des exponierten Abschnitts (51) des Metalleinsatzes (5) aufeinander zum Erlangen einer Plattierung mit großer Geschwindigkeit der besagten Flächen zum Verschweißen (11, 21) aufeinander und zum Erlangen einer Verschweißung zwischen dem exponierten Abschnitt (51) des Metalleinsatzes (5) des Verbund-Bauteils (2) und des komplementären Abschnitts der Fläche zum Verschweißen (11) des Metall-Bauteils (1), wobei der Schritt des Schießens durchgeführt wird, um eine progressive Plattierung der Flächen zum Verschweißen (11, 21) aufeinander zu erlangen, um ein Austreiben von Oxiden zu gewährleisten, und
wobei das Metall-Bauteil (1) und/oder der exponierte Abschnitt (51) des Metalleinsatzes (5) einen zu schießenden Abschnitt (15, 51) aufweist, dessen vordere Fläche (151, 53) die Fläche zum Verschweißen (11, 21) bildet, und wobei die besagte progressive Plattierung erlangt wird mittels:
- wenigstens einer elektrisch isolierenden Unterlegscheibe (8), die zwischen den beiden Bauteilen (1, 2) angeordnet ist und den zu schießenden Abschnitt (15) umgibt, oder
- eines zu schießenden Abschnitts (15) in Form eines Buckels, oder
- einer Auf-den-Rand-Falzung des Metall-Bauteils (1), die dazu bestimmt ist, den zu schießenden Abschnitt (15) zu bilden.

2. Verfahren zum Zusammenbau gemäß Anspruch 1, **dadurch gekennzeichnet, dass** das Verbund-Bauteil (2) eine vordere Seite (2a) aufweist, die mit der Fläche (21) zum Verschweißen versehen ist, und
dass, während des Schritts des Bereitstellens, der Metalleinsatz (5) des Verbund-Bauteils (2) sich befindet:
- bündig zu der vorderen Seite (2a) des besagten Verbund-Bauteils (2), oder
- zurückversetzt von der vorderen Seite (2a) des besagten Verbund-Bauteils (2).

3. Verfahren zum Zusammenbau gemäß irgendeinem der Ansprüche 1 oder 2, für ein Verbund-Bauteil (2), das aus einem thermoplastischen Material realisiert ist, **dadurch gekennzeichnet, dass** der Schritt des Bereitstellens des Verbund-Bauteils (2) aufweist einen Vorgang des Inkludierens des Metalleinsatzes (5) in das besagte Verbund-Bauteil (2) mittels Erwärmens und mittels Pressens.

4. Verfahren zum Zusammenbau gemäß irgendeinem der Ansprüche 1 bis 3, **dadurch gekennzeichnet, dass** der Metalleinsatz (5) realisiert ist aus Stahl, aus Aluminiumlegierung oder aus Titan, und dass das besagte Metall-Bauteil (1) realisiert ist aus Stahl oder aus Aluminiumlegierung.

5. Verfahren zum Zusammenbau gemäß irgendeinem der Ansprüche 1 bis 4, **dadurch gekennzeichnet, dass** der Metalleinsatz (5) besteht aus einer Platte, die mit Durchgangsöffnungen (56) versehen ist, oder aus einer Voll-Platte.

6. Verfahren zum Zusammenbau gemäß Anspruch 5, **dadurch gekennzeichnet, dass** der Metalleinsatz (5) besteht aus einer Platte, die mit Durchgangsöffnungen (56) versehen ist, die eine Form haben, die sich von der Seite des exponierten Abschnitts (51) aus weitet, die in das Verbund-Bauteil (2) eingebracht ist, sodass das Verbund-Material zumindest teilweise einen Abschnitt der besagten Durchgangsöffnungen (56) füllt.

7. Verfahren zum Zusammenbau gemäß irgendeinem der Ansprüche 1 bis 6, **dadurch gekennzeichnet, dass** wenigstens ein Abschnitt der nicht-exponierten Fläche (54, 55) des Metalleinsatzes (5), der in Kontakt mit dem Verbund-Material ist, präpariert ist, um die Kontaktfläche zwischen dem Metalleinsatz (5) und dem das Verbund-Bauteil (2) bildenden Material zu vergrößern.

8. Verfahren zum Zusammenbau gemäß irgendeinem der Ansprüche 1 bis 7, **dadurch gekennzeichnet, dass** das Metall-Bauteil (1) und/oder der exponierte Abschnitt (51) des Metalleinsatzes (5) einen Abschnitt zum Schießen aufweist, dessen vordere Fläche (151, 53) den Abschnitt zum Verschweißen (11, 21) bildet, wobei der Schritt des Schießens erlangt ist mittels eines Magnetimpulses, der auf den zu schießenden Abschnitt (15, 51) aufgebracht wird.

9. Verfahren zum Zusammenbau gemäß Anspruch 8, **dadurch gekennzeichnet, dass** das Metall-Bauteil (1) und/oder der exponierte Abschnitt (51) des Metalleinsatzes (5) elektrisch nicht-leitend ist, und dass der zu schießende Abschnitt (15, 51) aufweist eine hintere Fläche (152, 54), die der zu schweißenden Fläche (11, 21) gegenüberliegt und die von einem elektrisch leitenden Material bedeckt ist.

10. Verfahren zum Zusammenbau gemäß irgendeinem der Ansprüche 1 bis 9, **dadurch gekennzeichnet**, der Schritt des Schießens mit großer Geschwindigkeit besteht aus einem Schritt des Schießens mit großer Geschwindigkeit der Fläche zum Verschweißen (11) des Metall-Bauteils (1) auf die Fläche zum Verschweißen (21) des Verbund-Bauteils (2).

11. Verfahren zum Zusammenbau gemäß irgendeinem der Ansprüche 1 bis 9, **dadurch gekennzeichnet, dass** der Schritt des Schießens mit großer Geschwindigkeit besteht aus einem Schritt des Schießens mit großer Geschwindigkeit des exponierten Abschnitts (51) des Metalleinsatzes (5) auf die Fläche zum Verschweißen (11) des Metall-Bauteils (1).

12. Einrichtung mit einem Bauteil (1), das aus einem MetallMaterial realisiert ist, und einem Bauteil (2), das aus einem Verbund-Material mit organischer Matrix realisiert ist, erhalten durch ein Verfahren zum Zusammenbau gemäß irgendeinem der Ansprüche 1 bis 11, wobei das Metall-Bauteil (1) eine vordere Seite (1a) aufweist, die dem Verbund-Bauteil (2) gegenüber ist, und wobei das Verbund-Bauteil (2) aufweist eine vordere Seite (2a), die dem Metall-Bauteil (1) gegenüber ist, und eine hintere Seite (2b), die zu der besagten vorderen Seite (2a) entgegengesetzt ist,
und **gekennzeichnet dadurch:**
**dass** das besagte Verbund-Bauteil (2) aufweist wenigstens einen Metalleinsatz (5), der teilweise in das Verbund-Bauteil (2) eingebettet ist, wobei der besagte wenigstens eine Metalleinsatz (5) aufweist einen exponierten Abschnitt (51) in der Fläche (2a) des besagten Verbund-Bauteils (2), der mit einem komplementären Abschnitt der Fläche (11) des Metall-Bauteils (1) verschweißt ist, und eine äußere Seite (53), die den exponierten Abschnitt (51) des Metalleinsatzes (5) bildet,
wobei der zu schießende Abschnitt (15) eine bezüglich der vorderen Seite (1a) des Metall-Bauteils (1) konvexe Konfiguration hat,
oder wobei das Metall-Bauteil (1) aufweist einen hinteren Abschnitt (16), der die hintere Seite (2b) des Verbund-Bauteils (2) bedeckt, einen seitlichen Abschnitt (17), der an den Rand des Verbund-Bauteils (2) angeschmiegt ist, und einen vorderen Abschnitt, der sich gegenüber der vorderen Seite (2a) des Verbund-Bauteils (2) erstreckt und der eine Falzung bildet, die dazu bestimmt ist, den zu schießenden Abschnitt (15) zu bilden, wobei das Verbund-Bauteil (2) zwischen dem hinteren Abschnitt (16) und dem vorderen Abschnitt (17) des Metall-Bauteils 1 Sandwich-artig aufgenommen ist,
oder wobei ein Ausschnitt (25) in bezüglich der äußeren Seite (53) des Metalleinsatzes (5) oben-liegenden Lagen des Verbund-Bauteils (2) vorliegt, wobei der zu schießende Abschnitt (15) eine bezüglich der vorderen Seite (1a) des Metall-Bauteils (1) konvexe Konfiguration hat, die sich in den Ausschnitt (25) erstreckt,
oder wobei der exponierte Abschnitt (51) des Metalleinsatzes (5) eine sich in den Ausschnitt (25) erstreckende, konvexe Konfiguration in Richtung zu der vorderen Seite (1a) des Metall-Bauteils (1) und zu der vorderen Seite (2a) des Verbund-Bauteils (2) hat.

## Claims

1. A method of assembly between a work piece (1) made of a metal material and a work piece (2) made of an organic-matrix composite material, comprising the following successive steps:
a) a step of providing said two work pieces (1, 2),
wherein said work pieces (1, 2) each include a surface (11, 21) intended to be welded to a complementary surface (11, 21) of the other work piece (1, 2), and
**characterized in that**:
said surface to be welded (21) of said composite work piece (2) is consisted, at least partially, by an exposed area (51) of at least one metal insert (5) that is partially embedded into said composite work piece (2),
and **characterized by** the following steps:
b) a step of positioning said surfaces to be welded (11, 21) opposite to each other and remote from each other, and
c) a step of throwing at high speed the surface to be welded (11) of the metal work piece (1) and/or of the exposed area (51) of the metal insert (5), against one another, to obtain high-speed pressing of said surfaces to be welded (11, 21) against each other and to obtain a weld between the exposed area (5) of the metal insert (5) of the composite work piece (2) and the complementary area of the surface to be welded (11) of the metal work piece (1), the throwing step is implemented so as to obtain a progressive pressing of the surfaces to be welded (11, 21) against each other, to ensure an expulsion of the oxides,
and the metal work piece (1) and/or the exposed portion (51) of the metal insert (5) includes a portion to be thrown (15, 51), a front surface (151, 53) of which constitutes the surface to be welded (11, 21), and said progressive pressing is obtained through:
- at least one electrically insulating shim (8) provided between the two work pieces (1, 2) and surrounding the portion to be thrown (15), or
- a boss-shaped portion to be thrown (15), or
- a fold at the edge of the metal work piece (1), intended to form said portion to be thrown (15).

2. The assembly method according to claim 1, **characterized in that** the composite work piece (2) includes a front face (2a) provided with the surface to be welded (21), and
**in that**, during the providing step, the metal insert (5) of the composite work piece (2) is located:
- flush with the front face (2a) of said composite work piece (2), or
- back from the front face (2a) of said composite work piece (2).

3. The assembly method according to any one of claims 1 or 2, for a composite work piece (2) made of a thermoplastic material, **characterized in that** the step of providing the composite work piece (2) comprises an operation of including the metal insert (5), by heat and pressure, into said composite work piece (2).

4. The assembly method according to any one of claims 1 to 3, **characterized in that** the metal insert (5) is made of steel, aluminium alloy or titanium, and **in that** said metal work piece (1) is made of steel or aluminium alloy.

5. The assembly method according to any one of claims 1 to 4, **characterized in that** the metal insert (5) consists in a plate provided with through-holes (56) or a solid plate.

6. The assembly method according to claim 5, **characterized in that** the metal insert (5) consists in a plate provided with through-holes (56) having a flared shape on the exposed area (51) added in the composite work piece (2) so that the composite material fills at least a part of said through-holes (56).

7. The assembly method according to any one of claims 1 to 6, **characterized in that** at least an area of the non-exposed surface (54, 55) of the metal insert (5), in contact with the composite material, is prepared so as to increase the surface of contact between said metal insert (5) and the constitutive material of the composite work piece (2).

8. The assembly method according to any one of claims 1 to 7, **characterized in that** the metal work piece (1) and/or the exposed area (51) of the metal insert (5) includes a portion to be thrown (15, 51), a front surface (151, 53) of which constitutes the surface to be welded (11, 21), the throwing step is obtained by means of a magnetic pulse that is applied to said portion to be thrown (15, 51).

9. The assembly method according to claim 8, **characterized in that** the metal work piece (1) and/or the exposed area (51) of the metal insert (5) is non-electrically conductive, and **in that** the portion to be thrown (15, 51) includes a rear surface (152, 54), opposed to the surface to be welded (11, 21), that is covered with an electrically conductive material.

10. The assembly method according to any one of claims 1 to 9, **characterized in that** the high-speed throwing step consists in a step of throwing at high speed the surface to be welded (11) of the metal work piece (1) against the surface to be welded (21) of the composite work piece (2).

11. The assembly method according to any one of claims 1 to 9, **characterized in that** the high-speed throwing step consists in a step of throwing at high speed the exposed area (51) of the metal insert (5) against the surface to be welded (11) of the metal work piece (1).

12. A unit comprising a work piece (1) made of a metal material and a work piece (2) made of an organic-matrix composite material, coming from a method of assembly according to any one of claims 1 to 11, the work piece (1) made of a metal material comprising a front face (1a) opposite the composite work piece (2), and the composite work piece (2) comprising a front face (2a) opposite the metal work piece (1) and a rear face (2b), opposite to said front face (2a), and **characterized in that** said composite work piece (2) includes at least one metal insert (5) partially embedded into said composite work piece (2), said at least one metal insert (5) including an exposed area (51) at the surface (2a) of said composite work piece (2) that is welded with a complementary portion of the surface (11) of the metal work piece (1), and an outer face (53) forming the exposed portion (51) of the metal insert (5),
wherein the portion to be thrown (15) has a convex arrangement with respect to the front face (1a) of the metal work piece (1), or
the work piece (1) made of a metal material comprises a rear portion (16), covering the rear face (2b) of the composite work piece (2), a lateral portion (17) conforming the edge of the composite work piece (2), and a front portion extending opposite the front face (2a) of the composite work piece (2) and forming a folding intended to constitute the portion to be thrown (15), the composite work piece (2) being taken in sandwich between the rear portion (16) and the front portion (17) of the metal work piece (1), or
a cut (25) is made in overlying plies of the composite work piece (2) with respect to the outer face (53) of the metal insert (5), the portion to be thrown (15) having a convex arrangement with respect to the front face (1a) of the metal work piece (1) extending within the cut (25), or
the exposed portion (51) of the metal insert (5) having a convex arrangement towards the front face (1a) of the metal work piece (1) and the front face (2a) of said composite work piece (2), extending within the cut (25).
